# EUROPEAN PATENT APPLICATION

(11) **EP 4 163 529 A1**
(43) Date of publication of application: **12.04.2023**
(21) Application number: 21201976.4
(22) Date of filing: 11.10.2021
(51) Int. Cl.: F16L 23/16, F16L 39/00

(54) **A PROCESS FLUID CONVEYING COMPONENT**

(71) Applicant: MAN Energy Solutions Sverige AB, 418 78 Göteborg (SE)
(72) Inventor: BJURLID, Martin, 435 43 PIXBO (SE); PARKKONEN, Marko, 412 55 GÖTEBORG (SE); ÅGREN, Stefan, 416 70 GÖTEBORG (SE); IDEGÅRD, Andreas, 417 45 GÖTEBORG (SE)
(74) Representative: Jönrup, Emil

(57) **Abstract**

The invention relates to a process fluid conveying component (4) comprising a channel (8) for conveying a process fluid, wherein the channel is open at a first end (10) of the process fluid conveying component for providing a process fluid communication with another process fluid conveying component (6). The process fluid conveying component (4) has an end surface (12) at the first end (10) adapted to engage with said another process fluid conveying component (6). Further, the process fluid conveying component (4) comprises a process fluid collection chamber (14) at a distance from the engagement end surface (12) in a longitudinal direction of the channel (8) and at least one opening (16) providing a process fluid communication between the engagement end surface (12) and the process fluid collection chamber (14) to transport any leakage of process fluid from the first end (10) of the process fluid conveying component (4) to the process fluid collection chamber (14).

## Description

### TECHNICAL FIELD

The invention relates to a process fluid conveying component comprising a channel for conveying a process fluid, wherein the channel is open at a first end of the process fluid conveying component for providing a process fluid communication with another process fluid conveying component, wherein the process fluid conveying component has an end surface at the first end adapted to engage with said another process fluid conveying component.

One application for such a process fluid conveying component is for conveying a cryogenic process fluid. More specifically, the process fluid conveying component may be adapted for conveying the process fluid in a cryogenic state. According to an alternative, the process fluid conveying component may be adapted for conveying the process fluid in a warm state, such as in a position downstream of a vaporizer.

More specifically, the process fluid conveying component may be adapted for handling liquid hydrogen (H2). Hydrogen is extremely prone to leakage due to the fact that the molecules are very small. Any leakage must be controlled since Hydrogen is both explosive and flammable. The process fluid conveying component may further be adapted for handling Hydrogen in a liquid state, wherein a design temperature may be as low as -250°C. Another potential application is for handling Liquid Natural Gas (LNG). The process fluid conveying component may however be used also for handling non cryogenic fluids, such as Methanol or Ammonia, where a secondary barrier is required.

The process fluid conveying component may comprise a process fluid pipe, which is enclosed by an outer pipe so that the secondary barrier is formed in order to handle any leakage from the process fluid pipe. Further, a chamber defined between the process fluid pipe and the outer pipe may be vacuum-pumped. The purpose of the vacuum is to reduce gas conduction/convection so as to maintain the process fluid at cryogenic temperatures, typically -100°C or below. Generally the process fluid pipe is insulated with multi layer insulation for cryogenic applications. For an application handling the process fluid in a warm state, such as in the form of a gas, the pipe may not require any insulation. The process fluid conveying component may also, with some small modifications, be used with a stagnant inert gas at some overpressure in the space between the pipes.

### SUMMARY

A first object of the invention is to achieve a process fluid conveying component, which is adapted for providing a process fluid communication with another process fluid conveying component in a safe way, especially for process fluids which may be dangerous or harmful in the case of an uncontrolled leakage.

The object is achieved by a device according to claim 1. Thus, it is achieved by a process fluid conveying component comprising a channel for conveying a process fluid, wherein the channel is open at a first end of the process fluid conveying component for providing a process fluid communication with another process fluid conveying component, wherein the process fluid conveying component has an end surface at the first end adapted to engage with said another process fluid conveying component, characterized in that the process fluid conveying component comprises a process fluid collection chamber at a distance from the engagement end surface in a longitudinal direction of the channel and at least one opening providing a process fluid communication between the engagement end surface and the process fluid collection chamber to transport any leakage of process fluid from the first end of the process fluid conveying component to the process fluid collection chamber.

The process fluid conveying component may form a part of a coupling arrangement, which comprises also said another process fluid conveying component and a seal arrangement for sealing between engagement end surfaces of the two components. By designing the seal arrangement in a proper way, the process fluid channel may be sealed in relation to the opening at an interface between the two components. According to one example, the seal arrangement comprises a first seal portion for this purpose, which is arranged between the engagement end surfaces of the two components radially between the process fluid channel and the opening. Further, by designing the seal arrangement in a proper way, the opening may be sealed in relation to the external environment at an interface between the two components. According to one example, the seal arrangement comprises a second seal portion for this purpose, which is arranged between the engagement end surfaces of the two components radially outside of the opening. In this way, any leakage of process fluid from the channel past the first seal portion may be transported via the opening to the process fluid chamber.

According to one example, the channel is open at a second end of the process fluid conveying component for providing a process fluid communication with a further process fluid conveying component. Thus, the inventive process fluid conveying component may form an intermediate piece in a process fluid flow direction in a process fluid system.

According to one further example, the channel extends longitudinally at least partly along a straight line. According to one further example, the second end of the process fluid conveying component is positioned at an opposite end of the process fluid conveying component relative to the first end in a longitudinal direction of the channel.

According to one further example, the process fluid conveying component comprises a body, which defines the channel as an internal void.

According to one further example, the at least one opening providing the process fluid communication between the engagement end surface and the process fluid collection chamber is formed by at least one hole. According to one further example, the at least one hole is formed in the body defining the channel. According to one further example, the at least one hole extends in parallel with the channel. According to one further example, the at least one hole extends radially outside of the channel.

According to one further example, the process fluid collection chamber is arranged radially outside of the channel. According to one further example, the process fluid collection chamber circumscribes the channel. According to one further example, the process fluid collection chamber has a significantly larger volume than the volume of the at least one hole. According to one further example, the process fluid collection chamber has a larger extension than the at least one hole in a radial direction of the process fluid conveying component and in a longitudinal direction of the process fluid conveying component.

According to one embodiment example, the process fluid conveying component comprises a process fluid pipe, which defines at least a main portion of the process fluid channel, and wherein the process fluid collection chamber is delimited radially inwards by a radial outer surface of the process fluid pipe.

Such a design creates conditions for a space-efficient construction of the process fluid conveying component and an easy production thereof.

According to a further embodiment example, the process fluid conveying component comprises a flange for attachment of the process fluid conveying component to a corresponding flange of said another process fluid conveying component.

In this way, the process fluid conveying components may be forced against each other in a way securing that any leakage of process fluid from the process fluid channel is directed to the process fluid chamber. Further, a flange connection creates conditions for easy disassembly of the process fluid conveying components for testing or maintenance.

According to one example, each one of the flanges comprises a plurality of circumferentially spaced through holes. The process fluid conveying components are directed so that the through holes meet and associated bolts are received in the through holes for bracing the flanges against each other via tightening of nuts.

According to a further embodiment example, the flange is rigidly connected to the process fluid pipe and projects radially from the process fluid pipe. According to one example, the flange may be formed in one piece with the process fluid pipe. According to another example, the flange may be welded to the process fluid pipe.

According to one example, one end surface of the flange forms the end surface of the process fluid conveying component.

According to a further embodiment example, the process fluid collection chamber is delimited in the longitudinal direction of the channel by the flange. According to this embodiment, the at least one opening extends through the flange in the longitudinal direction of the channel. It creates conditions for an easy manufacturing of the process fluid conveying component.

According to a further embodiment example, the process fluid conveying component comprises a pipe section with an inner diameter that is larger than an outer diameter of the process fluid pipe, wherein the process fluid collection chamber is delimited radially outwards by a radial inner surface of the pipe section. It creates further conditions for an easy manufacturing of the process fluid conveying component.

According to one example, the process fluid pipe has a circular cross section. According to a further example, the pipe section also has a circular cross section.

According to a further embodiment example, the process fluid conveying component comprises an outer pipe, which is arranged concentric to the process fluid pipe defining a space between an outer surface of the process fluid pipe and an inner surface of the outer pipe.

According to one example, the process fluid pipe is enclosed by the outer pipe so that a secondary barrier is formed in order to handle a leakage from the process fluid pipe. The chamber defined between the process fluid pipe and the outer pipe may be vacuum-pumped. It allows for easy testing of the leak tightness since vacuum may be applied.

According to a further embodiment example, the process fluid conveying component comprises a radially extending wall, wherein the radially extending wall delimits the insulation space and the process fluid collection chamber from each other. It creates further It creates conditions for an easy manufacturing of the process fluid conveying component. According to one example, the pipe section defining the process fluid chamber is arranged at a smaller radial distance than the outer pipe.

According to a further embodiment example, the process fluid conveying component comprises a port for connection to a vacuum pump for vacuum pumping the process fluid collection chamber for facilitating the transport of any leakage of process fluid from the process fluid pipe to the process fluid collection chamber when the process fluid conveying component is in an operative state.

According to a further embodiment example, the process fluid conveying component comprises a port for connection to a venting device, for venting any collected process fluid in the process fluid collection chamber.

According to one example, the port for connection to the vacuum pump and the port for connection to the venting device is formed by one single port.

According to a further embodiment example, the process fluid conveying component comprises a plurality of circumferentially spaced openings providing the process fluid communication between the engagement end surface and the process fluid collection chamber.

According to a further embodiment example, the process fluid conveying component is adapted for conveying the process fluid in the form of a cryogenic fluid.

According to a further aspect of the invention, it regards a coupling arrangement comprising a first process fluid conveying component as above and a second process fluid conveying component, wherein the second process fluid conveying component comprises an end surface adapted to engage with said engagement end surface of the first process fluid conveying component, and wherein the coupling arrangement comprises a seal arrangement for sealing between the engagement end surfaces.

According to one further example, said another process fluid conveying component comprises an end surface facing the end surface at the first end of the fluid conveying component and adapted to engage with said another process fluid conveying component

According to one embodiment example, the seal arrangement comprises a radial inner portion positioned radially between the process fluid pipe and the opening at the engagement end surface. Any leakage through the radial inner portion (primary barrier) may be detected in several ways, such as via gas detection and pressure monitoring (such as due to loss of vacuum).

According to a further embodiment example, the seal arrangement comprises a radial outer portion positioned radially outside of the opening at the engagement end surface.

According to a further embodiment example, the seal arrangement comprises a radial inner seal forming the radial inner portion and a radial outer seal separate from the radial inner seal, wherein the radial outer seal forming the radial outer portion and wherein the radial outer seal has a larger inner diameter than an outer diameter of the radial inner seal.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of a coupling arrangement according to a first embodiment,
Fig. 2 is a longitudinal cross section view of the coupling arrangement according to fig. 1,
Fig. 3a is close-up view in cross section of an interface between two process fluid conveying components in the coupling arrangement according to fig. 1,
Fig. 3b is a perspective view in cross section of the interface between the two process fluid conveying components in the coupling arrangement according to fig. 3a,
Fig. 3c is an exploded view of the interface between the two process fluid conveying components in the coupling arrangement according to fig. 3a,
Fig. 4a and 4b are cross section views of a venting device in a closed state and an open state, respectively,
Fig. 5 is a cross section view of a part for connection of a vacuum pump device.

### DETAILED DESCRIPTION OF EXAMPLE EMBODIMENTS

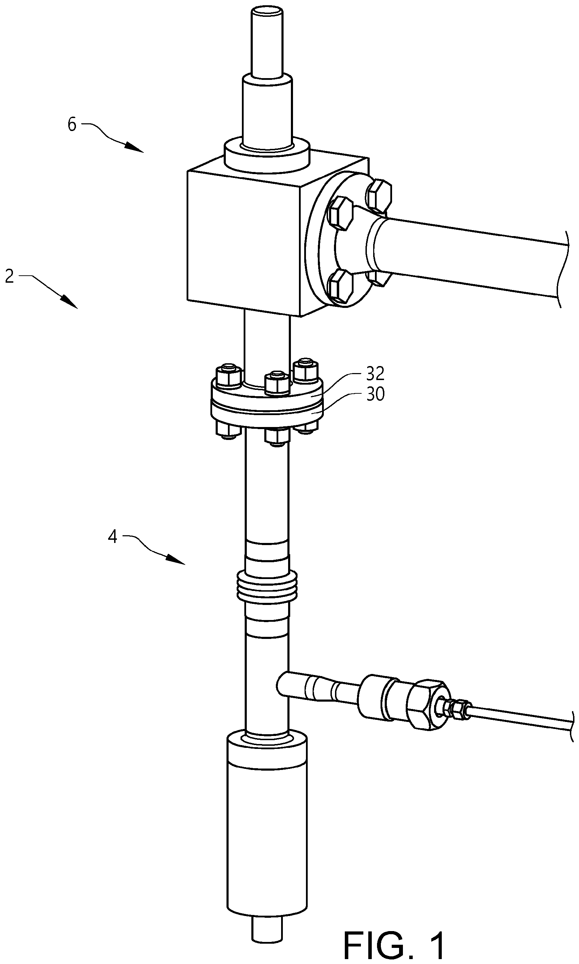

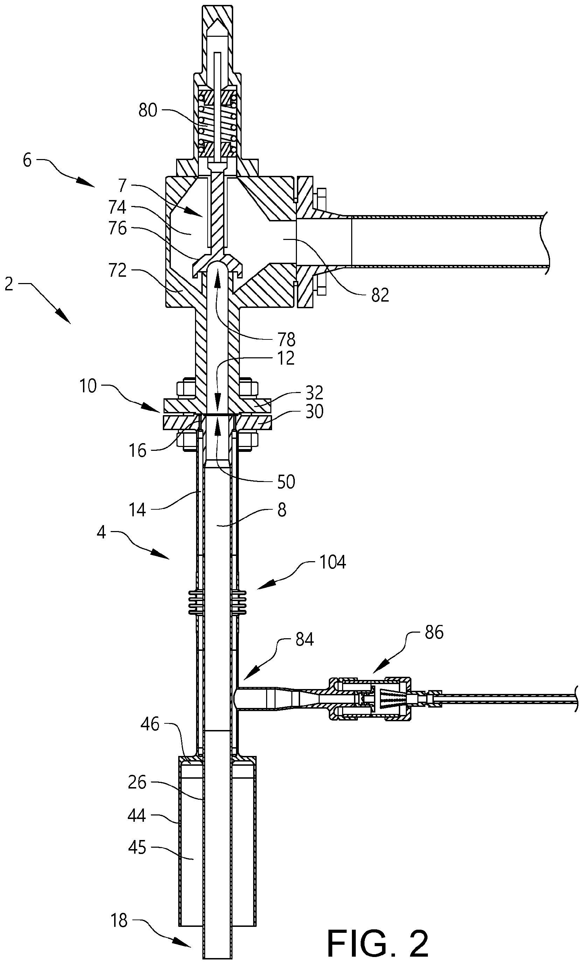

Fig. 1 is a perspective view of a coupling arrangement 2 according to a first embodiment and fig. 2 is a longitudinal cross section view of the coupling arrangement according to fig. 1.

The coupling arrangement 2 is adapted for handling a process fluid in the form of Hydrogen. More specifically, the coupling arrangement 2 is adapted for a Hydrogen Fuel Gas System for a marine application. The piping system is joined by welding with a minimum of flange connections. Some components are however flanged to facilitate required and periodic maintenance or where deemed necessary for functionality. The coupling arrangement 2 is especially applicable in such a flanged connection for control of any leakage.

The coupling arrangement 2 comprises a process fluid conveying component 4 according to a first embodiment and another process fluid conveying component 6. The first-mentioned process fluid conveying component 4 will in the following be referred to as a first process fluid conveying component 4. Said another process fluid conveying component 6 will in the following be referred to as a second process fluid conveying component 6. The second process fluid conveying component 6 comprises a safety valve 7 for protection from too high pressure.

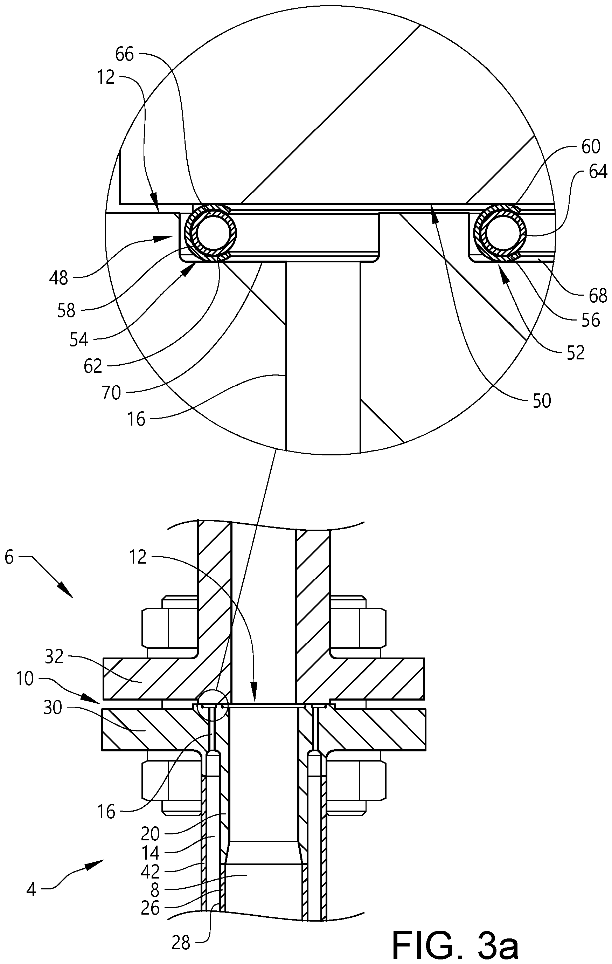

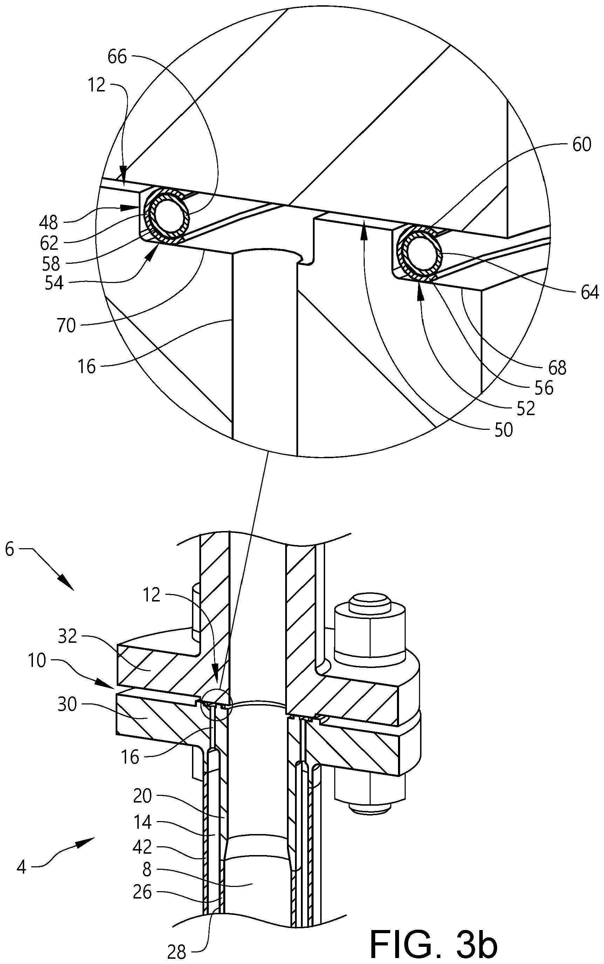

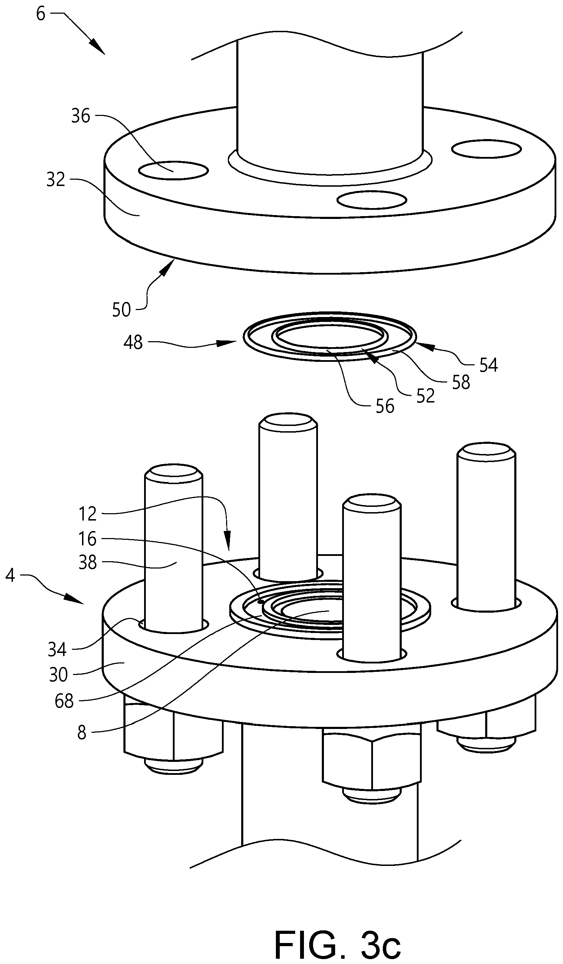

Fig. 3a is close-up view in cross section of an interface between the first process fluid conveying component 4 and the second process fluid conveying component 6. Fig. 3b is a perspective view in cross section of the interface between the two process fluid conveying components 4, 6. Fig. 3c is an exploded view of the interface between the two process fluid conveying components 4, 6.

The first process fluid conveying component 4 comprises a channel 8 for conveying a process fluid. The channel 8 is open at a first end 10 of the first process fluid conveying component 4 for providing a process fluid communication with the second process fluid conveying component 6. The first process fluid conveying component 4 has an end surface 12 at the first end 10 adapted to engage with the second process fluid conveying component.

Further, the first process fluid conveying component 4 comprises a process fluid collection chamber 14 at a distance from the engagement end surface 12 in a longitudinal direction of the channel 8 and at least one opening 16 providing a process fluid communication between the engagement end surface 12 and the process fluid collection chamber 14 to transport any leakage of process fluid from the first end 10 of the process fluid channel 8 to the process fluid collection chamber 14.

The channel 8 is open at a second end 18 of the first process fluid conveying component 4 for providing a process fluid communication with a further process fluid conveying component (not shown). The second end 18 of the first process fluid conveying component 4 may be adapted for a non-releasable connection, such as via welding, to the further process fluid conveying component.

The first process fluid conveying component 4 is designed so that the process fluid channel 8 extends longitudinally along a straight line. The second end 18 of the first process fluid conveying component 4 is positioned at an opposite end of the first process fluid conveying component 4 relative to the first end 10 in a longitudinal direction of the process fluid channel 8.

More specifically, the first process fluid conveying component 4 comprises a body 20, which defines the process fluid channel 8 as an internal void. More specifically, the body 20 comprises a process fluid pipe 26, which defines the process fluid channel 8.

The at least one opening 16 providing the process fluid communication between the engagement end surface 12 and the process fluid collection chamber 14 is formed by at least one hole. More specifically, the at least one hole is formed in the body 20 defining the process fluid channel 8. More specifically, the at least one hole extends in parallel with a longitudinal direction of the process fluid channel 8. According to one further example, the at least one hole extends radially outside of the process fluid channel 8. More specifically, a plurality of openings 16 are distributed in a circumferentially spaced relationship.

The process fluid collection chamber 14 is arranged radially outside of the process fluid channel 8. More specifically, the process fluid collection chamber 14 circumscribes the process fluid channel 8. More specifically, the process fluid collection chamber 14 has a significantly larger volume than a volume of the at least one hole. More specifically, the process fluid collection chamber 14 has a larger extension than the at least one hole in a radial direction of the first process fluid conveying component 4 and in a longitudinal direction of the first process fluid conveying component 4.

The first process fluid conveying component 4 comprises the process fluid pipe 26, wherein the process fluid collection chamber 14 is delimited radially inwards by a radial outer surface 28 of the process fluid pipe 26.

The first process fluid conveying component 4 further comprises a flange 30 for attachment of the first process fluid conveying component 4 to a corresponding flange 32 of the second process fluid conveying component 6. Each one of the flanges 30,32 comprises a plurality of circumferentially spaced through holes 34, 36 in a matching pattern, see fig. 3c. The process fluid conveying components 4, 6 are arranged so that the through holes 34, 36 meet and associated bolts 38 are received in the through holes for bracing the flanges 30, 32 against each other.

The flange 30 of the first process fluid conveying component 4 is rigidly connected to the process fluid pipe 26 and projects radially from the process fluid pipe. More specifically, the flange 30 is formed in one piece with the process fluid pipe 26. In other words, the flange 30 forms an integral part of the body 20. The flange 30 is arranged at the first end 10 of the first process fluid conveying component 4.

Further, the process fluid collection chamber 14 is delimited in the longitudinal direction of the process fluid channel 8 by the flange 30, wherein the at least one opening 16 extends through the flange 30 in the longitudinal direction of the process fluid channel 8.

Further, the first process fluid conveying component 4 comprises a pipe section 42 with an inner diameter that is larger than an outer diameter of the process fluid pipe 26, wherein the process fluid collection chamber 14 is delimited radially outwards by a radial inner surface of the pipe section 42. The pipe section 42 may be non-releasably connected to the flange 30, such as via welding.

The process fluid pipe 26 has a circular cross section. Further, the pipe section 42 also has a circular cross section.

Turning now to fig. 2. The process fluid conveying component 4 comprises an outer pipe 44, which is arranged concentric to the process fluid pipe 26 defining a space between an outer surface of the process fluid pipe 26 and an inner surface of the outer pipe 44. The outer pipe 44 forms a secondary barrier in order to handle a leakage from the process fluid pipe. A chamber 45 defined between the process fluid pipe 26 and the outer pipe 44 may be vacuum-pumped (not shown). The outer pipe 44 may then be defined as an insulation. The pipe section 42 is arranged between the flange 30 and the outer pipe 44 in the longitudinal direction of the first process fluid component 4. The first process fluid conveying component 4 further comprises a radially extending wall 46, which delimits the chamber 45 and the process fluid collection chamber 14 from each other in the longitudinal direction of the process fluid channel 8. The pipe section 42 defining the process fluid chamber 14 is arranged at a smaller radial distance from a center axis of the process fluid channel 8 than the outer pipe 44.

The coupling arrangement 2 further comprises a seal arrangement 48 for sealing between the engagement end surface 12 of the first process fluid conveying component 4 and a corresponding end surface 50 of the second process fluid conveying component 6. The seal arrangement 48 comprises a radial inner portion 52 positioned radially between the process fluid channel 8 and the opening 16 at the engagement end surfaces 12, 50. Further, the seal arrangement 48 comprises a radial outer portion 54 positioned radially outside of the opening 16 at the engagement end surfaces 12, 50.

More specifically, the seal arrangement 48 comprises a radial inner seal 56 forming the radial inner portion 52 and a radial outer seal 58 separate from the radial inner seal 56, wherein the radial outer seal 58 forming the radial outer portion 54 and wherein the radial outer seal 58 has a larger inner diameter than an outer diameter of the radial inner seal 56. Each one of the inner seal 56 and the outer seal 58 comprises a C-shaped ring 60, 62 of metal, such as in an Alloy 718 material. More specifically, each one of the C-shaped rings 60, 62 extends along a circular arc in cross section. More specifically, each one of the C-shaped rings 60, 62 is open radially inwards. Further a support ring 64, 66 of circular cross section is received in each one of the C-shaped rings 60, 62. An outer diameter of the support ring 64, 66 is the same as an inner diameter of the associated C-shaped ring 60, 62.

Further, one of the engagement end surfaces 12, 50 of the first process fluid conveying component 4 and the second process fluid conveying component 6 is provided with two radially spaced circular receptacles/grooves 68, 70 for receipt of each one of the inner seal 56 and the outer seal 58. The opening 16 ends in the radially outer receptacle/groove 70 in a position radially interior of the radially outer sealing 62. According to an alternative, the opening 16 may end in the radially inner receptacle/groove 68 in a position radially exterior of the radially inner sealing 60.

Turning now to the second process fluid conveying component 6, which comprises the safety valve 7, see fig. 2. More specifically, the safety valve 7 is in the form of a spring-loaded pressure relief valve. The safety valve 7 comprises a housing 72, which in turn encloses a chamber 74 housing a movably arranged closing member 76. The movably arranged closing member 76 is adapted to close a first opening 78, which is in fluid communication with the end face 50 of the second process fluid conveying component 6. Further, the movably arranged closing member 76 is spring-loaded via a spring 80. The housing 72 further comprises a second opening 82 in fluid communication with the chamber 74 for the pressure relief.

Further, the first process fluid conveying component 4 comprises a port 84, which is arranged in fluid communication with the process fluid collection chamber 14, for connection to a venting device 86, for venting any collected process fluid in the process fluid collection chamber 14 at a safe location to the atmosphere (such as at the end of a mast). The port 84 projects perpendicularly relative to the longitudinal direction of the first process fluid conveying component 4.

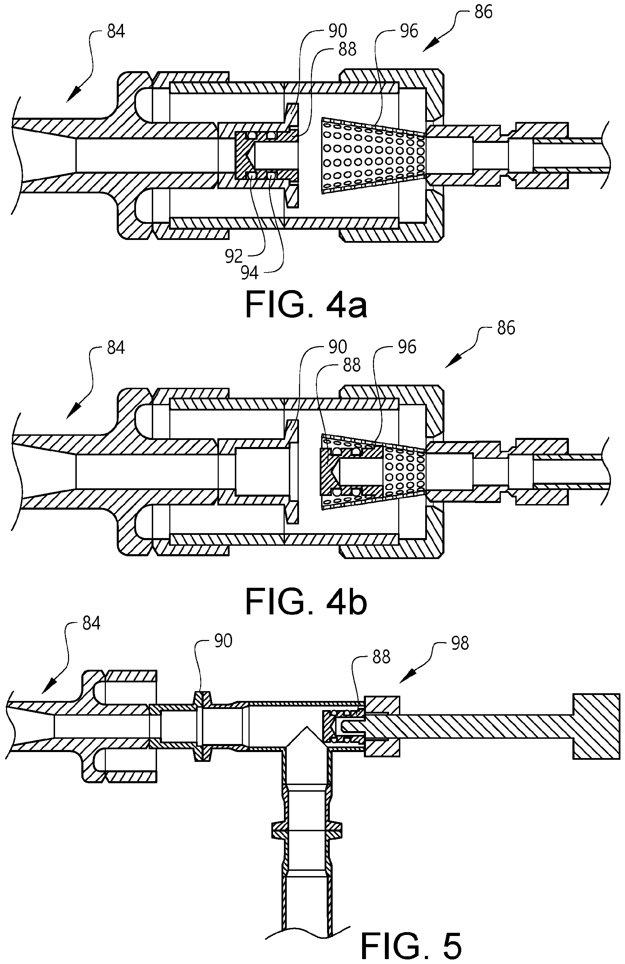

Fig. 4a and 4b are cross section views of the venting device 86 in a closed state and in an open state, respectively. The venting device 86 comprises a plunge 88 arranged in a seat 90. In a leakage situation, the plunge 88 is released from its seat 90 by the pressure build up in the process fluid chamber 14. The plunge 88 is kept in place by two O-rings 92, 94 together with the vacuum pressure if applied. A small pressure in the process fluid chamber 14 in the range of 0.1barg is enough for relief. The venting device 86 further comprises a plunge collection part 96 in the form of a perforated cone adapted to catch and keep the plunge in a position where it is not restricting or plugging the gas flow, nor creating sparks. Thus, a large end of the perforated cone 96 faces the seat 90 and is positioned at a distance from the seat 90.

Further, the first process fluid conveying component 4 is adapted for connection to a vacuum pump for vacuum pumping the process fluid collection chamber 14 for facilitating the transport of any leakage of process fluid from the process fluid pipe 8 to the process fluid collection chamber 14 when the first process fluid conveying component 4 is in an operative state. Fig. 5 is a cross section view of a part 98 for connection of a vacuum pump device. The part 98 for connection of a vacuum pump device is connected to the port 84. The pump connection part 98 can be described as an angle valve where a plunge 88 is drawn out from its seat 90 and opens up a fluid communication of the process fluid chamber 14 to the vacuum pump. When the vacuum pumping is done, the plunge 88 is let back into its seat 90 and the pump connection part 98 is disconnected from the port 84.

Turning now again to fig. 2, the first process fluid conveying component 4 comprises a bellows structure 104. The bellows structure 104 is used to compensate for thermal contractions, especially when conveying a fluid at cryogenic temperature.

It is to be understood that the present invention is not limited to the embodiments described above and illustrated in the drawings; rather, the skilled person will recognize that many changes and modifications may be made within the scope of the appended claims.

For example, there are many different sealings and ring types available, which may perform the sealing performance required in view of certain design parameters of the system, such as media, pressure, pressure direction, temperature etc. Thus, the shape, size, material, coating etc. may vary. Likewise, requirements on the receptacles/grooves for the sealings such as dimensions and surface roughness for example may vary. According to one example, the seal arrangement may comprise one single seal body, wherein both the radially inner seal portion and the radially outer seal portion are integrally formed in the seal structure body.

Further, the second process fluid component may be adapted for a functionality different from a safety valve. For example, it may be used for other types of valves as well as equipment such as vacuum insulated tanks, vaporizers, and cryostats.

Further, the process fluid chamber need not to be under vacuum. According to an alternative, it could also be kept at atmospheric pressure with an inert gas or air without losing the function.

## Claims

1. A process fluid conveying component (4) comprising a channel (8) for conveying a process fluid, wherein the channel is open at a first end (10) of the process fluid conveying component for providing a process fluid communication with another process fluid conveying component (6), wherein the process fluid conveying component (4) has an end surface (12) at the first end (10) adapted to engage with said another process fluid conveying component (6), **characterized in that** the process fluid conveying component (4) comprises a process fluid collection chamber (14) at a distance from the engagement end surface (12) in a longitudinal direction of the channel (8) and at least one opening (16) providing a process fluid communication between the engagement end surface (12) and the process fluid collection chamber (14) to transport any leakage of process fluid from the first end (10) of the process fluid conveying component (4) to the process fluid collection chamber (14).

2. A process fluid conveying component according to claim 1, wherein the process fluid conveying component (4) comprises a process fluid pipe (26), which defines at least a main portion of the channel (8), and wherein the process fluid collection chamber (14) is delimited radially inwards by a radial outer surface of the process fluid pipe (26).

3. A process fluid conveying component according to claim 1 or 2, wherein the process fluid conveying component (4) comprises a flange (30) for attachment of the process fluid conveying component (4) to a corresponding flange (32) of said another process fluid conveying component (6).

4. A process fluid conveying component according to claim 2 and 3, wherein the flange (30) is rigidly connected to the process fluid pipe (26) and projects radially from the process fluid pipe.

5. A process fluid conveying component according to claim 4, wherein the process fluid collection chamber (14) is delimited in the longitudinal direction of the channel (8) by the flange (30).

6. A process fluid conveying component according to claim 2 or any one of claims 4-5, wherein the process fluid conveying component (4) comprises a pipe section (42) with an inner diameter that is larger than an outer diameter of the process fluid pipe (26), wherein the process fluid collection chamber (14) is delimited radially outwards by a radial inner surface of the pipe section (42).

7. A process fluid conveying component according to claim 2 or any one of claims 4-6, wherein the process fluid conveying component (4) comprises an outer pipe (44), which is arranged concentric to the process fluid pipe (44) defining a space between an outer surface of the process fluid pipe (26) and an inner surface of the outer pipe (44).

8. A process fluid conveying component according to claim 7, wherein the process fluid conveying component (4) comprises a radially extending wall (46), wherein the radially extending wall (46) delimits the space and the process fluid collection chamber (14) from each other.

9. A process fluid conveying component according to any preceding claim, wherein the process fluid conveying component (4) comprises a port (84) for connection to a vacuum pump for vacuum pumping the process fluid collection chamber (14) for facilitating the transport of any leakage of process fluid from the process fluid channel (8) to the process fluid collection chamber (14) when the process fluid conveying component (4) is in an operative state.

10. A process fluid conveying component according to any preceding claim, wherein the process fluid conveying component (4) comprises a port (84) for connection to a venting device (86), for venting any collected process fluid in the process fluid collection chamber.

11. A process fluid conveying component according to any preceding claim, wherein the process fluid conveying component (4) comprises a plurality of circumferentially spaced openings (16) providing the process fluid communication between the engagement end surface (10) and the process fluid collection chamber (14).

12. A process fluid conveying component according to any preceding claim, wherein the process fluid conveying component (4) is adapted for conveying the process fluid in the form of a cryogenic fluid.

13. A coupling arrangement (2) comprising a first process fluid conveying component (4) according to any one of the preceding claims and a second process fluid conveying component (6), wherein the second process fluid conveying component (6) comprises an end surface (50) adapted to engage with said engagement end surface (12) of the first process fluid conveying component (4), and wherein the coupling arrangement (2) comprises a seal arrangement (48) for sealing between the engagement end surfaces (12, 50).

14. A coupling arrangement according to claim 13, wherein the seal arrangement (48) comprises a radial inner portion (52) positioned radially between the process fluid channel (8) and the at least one opening (16) at the engagement end surfaces (12, 50).

15. A coupling arrangement according to claim 13 or 14, wherein the seal arrangement (48) comprises a radial outer portion (54) positioned radially outside of the at least one opening (16) at the engagement end surfaces (12, 50).

16. A coupling arrangement according to claim 14 and 15, wherein the seal arrangement (48) comprises a radial inner seal (56) forming the radial inner portion (52) and a radial outer seal (58) separate from the radial inner seal (56), wherein the radial outer seal (58) forming the radial outer portion (54) has a larger inner diameter than an outer diameter of the radial inner seal (56).
